# EUROPÄISCHE PATENTSCHRIFT

(11) **EP 2 977 265 B1**
(45) Veröffentlichungstag und Bekanntmachung des Hinweises auf die Patenterteilung: **13.06.2018**
(21) Anmeldenummer: 15001135.1
(22) Anmeldetag: 17.04.2015
(51) Int. Cl.: B60Q 3/82, B60Q 3/85, B60Q 3/57

(54) **LEUCHTANORDNUNG FÜR EIN KRAFTFAHRZEUG UND KRAFTFAHRZEUG**
LIGHT ASSEMBLY FOR A MOTOR VEHICLE AND MOTOR VEHICLE
SYSTÈME D'ÉCLAIRAGE POUR UN VÉHICULE AUTOMOBILE ET VÉHICULE AUTOMOBILE

(30) Priorität: 25.07.2014 DE 102014011093
(43) Veröffentlichungstag der Anmeldung: 27.01.2016
(73) Patentinhaber: AUDI AG, 85045 Ingolstadt (DE)
(72) Erfinder: Schmitz, Christoph, DE - 93326 Abensberg (DE); Neb, Jakob, DE - 85049 Ingolstadt (DE)
(74) Vertreter: Thielmann, Frank

(56) Entgegenhaltungen:
- EP-A2- 2 439 105
- FR-A1- 2 844 760
- US-A- 4 600 978
- US-A1- 2014 056 017

## Beschreibung

Die Erfindung betrifft eine Leuchtanordnung für ein Kraftfahrzeug, welche eine an einem Schwenkarm gehaltene Lichtquelle umfasst. Der Schwenkarm ist aus einer Verstaustellung, in welcher der Schwenkarm zumindest bereichsweise in einem Gehäuse aufgenommen ist, durch eine Schwenkbewegung des Schwenkarms um eine Schwenkachse in wenigstens eine Funktionsstellung bewegbar. In der Funktionsstellung ist die Lichtquelle aus dem Gehäuse herausbewegt. Die Lichtquelle ist durch das Bewegen des Schwenkarms aus der Verstaustellung in die wenigstens eine Funktionsstellung einschaltbar. Des Weiteren betrifft die Erfindung ein Kraftfahrzeug mit einer solchen Leuchtanordnung.

Die US 4 600 978 A beschreibt eine gattungsgemäße Beleuchtungseinrichtung mit einem Gehäuse und einer Beleuchtungskammer. Die Beleuchtungskammer, welche einen Deckel umfasst, kann aus dem Gehäuse herausgeschwenkt werden. Dies bewirkt das Einschalten einer in der Beleuchtungskammer angeordneten Lichtquelle.

Die US 2 421 680 A beschreibt einen Fahrzeugsitz mit einer Beleuchtungshalterung. Die Beleuchtungshalterung umfasst ein Lampengehäuse, welches schwenkbar in einer Klammer angeordnet ist, welche in einer Ausnehmung in einer Rückenlehne des Fahrzeugsitzes ausgebildet ist. Das Lampengehäuse ist in der Klammer zwischen Seitenwänden angeordnet und kann um einen Stift verschwenkt werden, welcher in den beiden Seitenwänden festgelegt ist und durch das Lampengehäuse hindurchgeführt ist. Das Licht einer elektrischen Glühbirne, welche in dem Lampengehäuse angeordnet ist, wird automatisch angeschaltet und abgeschaltet, indem die Halterung zwischen einer Gebrauchsstellung und einer Nichtgebrauchsstellung verschwenkt wird.

Die FR 2 983 811 A1 beschreibt einen Sitz für ein Transportfahrzeug mit einer Beleuchtungsvorrichtung, welche entlang von Führungsmitteln zwischen einer offenen Gebrauchsstellung und einer geschlossenen Verstaustellung bewegbar ist. Hierbei sind Beleuchtungsmittel vorgesehen, welche in der offenen Gebrauchsstellung aktiviert und in der geschlossenen Verstaustellung deaktiviert sind. Wenn ein Fahrzeuginsasse an einem Gehäuse zieht, an welchem die Beleuchtungsmittel angebracht sind, so gleitet das Gehäuse auf einer Länge entlang einer Führungsschiene aus dem Sitz heraus, welche sich in Richtung einer Achse erstreckt.

Die FR 2 844 760 A1 beschreibt einen Fahrzeugsitz mit einer Kopfstütze, welcher eine Beleuchtungseinrichtung umfasst. Ein Lampenkörper der Beleuchtungseinrichtung kann in die Kopfstütze versenkt werden, oder er kann in eine Querrichtung aus der Kopfstütze herausgefahren werden. Eine Lichtquelle, welche innerhalb des Lampenkörpers angeordnet ist, kann um eine Achse gedreht werden, welche zugleich die Verschiebeachse des Lampenkörpers bildet.

Die WO 2008/067 978 A1 beschreibt eine Beleuchtungseinrichtung zum Nutzen in Verkehrsmitteln für die Personenbeförderung, welche eine Lichtquelle umfasst, deren Licht über ein Lichtaustrittsteil abgestrahlt werden kann. Durch Drücken auf eine Stirnfläche kann das Lichtaustrittsteil aus einer Nichtgebrauchsstellung, in welcher es in einen Fahrgastsitz zumindest teilweise versenkt angeordnet ist, in eine das Licht abstrahlende Funktionsstellung ausgefahren werden. In dem Lichtaustrittsteil befindet sich eine Lichtaustrittsöffnung.

Die EP 1 093 967 A2 beschreibt eine Leuchteinheit für einen Fahrgastraum eines Kraftwagens. Die Leuchteinheit umfasst eine erste Lichtquelle, welche einen auf eine Armaturentafel des Kraftwagens gerichteten Lichtstrahl erzeugt. Eine zweite Lichtquelle ist an einem Schwenkarm angeordnet, welcher aus einer am Dach des Kraftwagens angeordneten Einfassung herausgeschwenkt werden kann. Mittels der an einem freien Ende des Arms angeordneten zweiten Lichtquelle, lässt sich das Innere des Fahrgastraums ausleuchten. In der Einfassung sind Taschen ausgebildet, in welchen der Schwenkarm und die Lichtquelle untergebracht werden können. Wird in dieser nicht herausgeklappten Stellung des Schwenkarms mittels eines am Gehäuse angeordneten Schalters die zweite Lichtquelle eingeschaltet, so tritt das Licht durch einen lichtdurchlässigen Bereich der Einfassung hindurch und gelangt so in den Fahrgastraum. Bei aus den Taschen herausgeschwenktem Schwenkarm kann ebenfalls durch Betätigen des Schalters die Lichtquelle eingeschaltet werden. Des Weiteren kann ein Einschalten der Lichtquelle durch Öffnen oder Schließen der Türen des Kraftwagens bewirkt werden.

Die DE 16 15 311 U beschreibt eine Leselampe, welche in einer Wand oder in einer Rückenlehne eines Fahrgastsitzes eines Kraftfahrzeugs eingebaut ist. Ein Deckel verschließt einen Aufnahmeraum für die Leselampe. Wird der Deckel aufgeklappt, so bewirkt eine Kipphebelübertragung ein Einschalten der Leselampe, wobei der aufgeklappte Deckel als Abschirmung dient und eine Blendwirkung verhindert.

Die DE 199 43 984 C2 beschreibt eine Leuchtenanordnung für einen Innenraum eines Kraftfahrzeugs, bei welchem in einem Leuchtengehäuse eine Lichtquelle angeordnet ist. Ein Deckel verschließt in einer Verschlussstellung eine Gehäuseöffnung des Leuchtengehäuses. In einer Freigabestellung gibt der Deckel die Gehäuseöffnung für einen Lichtaustritt frei. Zugleich wird durch Bewegen des Deckels in die Freigabestellung die Lichtquelle eingeschaltet. Am Deckel ist eine Austrittsoptik für das durch die Gehäuseöffnung austretende Licht ausgebildet.

Aufgabe der vorliegenden Erfindung ist es, eine Leuchtanordnung der eingangs genannten Art sowie ein Kraftfahrzeug mit einer solchen Leuchtanordnung zu schaffen, welche beziehungsweise welches einen erhöhten Bedienkomfort aufweist.

Diese Aufgabe wird durch eine Leuchtanordnung mit den Merkmalen des Patentanspruchs 1 und durch ein Kraftfahrzeug mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Bei der erfindungsgemäßen Leuchtanordnung ist die Lichtquelle durch das Bewegen des Schwenkarms aus der Verstaustellung in die wenigstens eine Funktionsstellung einschaltbar. Es braucht also nicht ein gesonderter Schalter betätigt zu werden, sondern beim Herausschwenken des Schwenkarms aus dem Gehäuse wird zugleich die Lichtquelle eingeschaltet. Dies geht mit einem erhöhten Bedienkomfort einher. Zugleich lassen sich je nach Schwenkstellung des Schwenkarms unterschiedliche Bereiche im Kraftfahrzeug mit der Lichtquelle beleuchten, wenn die Leuchtanordnung in dem Kraftfahrzeug angeordnet ist. Durch das mit dem Herausschwenken des Schwenkarms aus der Verstaustellung stattfindende Einschalten der Lichtquelle, ist eine besonders intuitive Bedienung der Leuchtanordnung erreichbar, da das Einschalten der Lichtquelle, etwa bei Nutzung derselben als Leselicht, inszeniert wird.

Durch Verbringen des Schwenkarms aus der wenigstens einen Funktionsstellung in die Verstaustellung lässt sich die Lichtquelle wieder ausschalten. Dadurch, dass der Schwenkarm in der Verstaustellung in dem Gehäuse aufgenommen ist, ist in der Verstaustellung die beispielsweise als Leseleuchte einsetzbare Lichtquelle besonders platzsparend untergebracht. Dies ist insbesondere bei Anordnung der Leuchtanordnung in dem Kraftfahrzeug vorteilhaft. Die Lichtquelle braucht nämlich lediglich bei Bedarf herausgeklappt oder ausgefahren zu werden. Sie erfüllt beim Herausschwenken jedoch unmittelbar ihre Funktion, etwa als Leselicht.

Erfindungsgemäß ist an dem Gehäuse ein in eine Schließstellung bewegbares Deckelelement gehalten, mittels welchem ein Hohlraum in dem Gehäuse zumindest bereichsweise abgedeckt werden kann, welcher bei in die Verstaustellung bewegtem Schwenkarm von der Lichtquelle eingenommen ist. Das Deckelelement verschließt in der Schließstellung eine durch das Herausdrehen des Schwenkarms aus einem dem Aufnehmen des Schwenkarms und der Lichtquelle dienenden Aufnahmeraum des Gehäuses entstehende Öffnung in dem Gehäuse. Dadurch ergibt sich auch in der Funktionsstellung des Schwenkarms eine optisch besonders ansprechende, hochwertige Gestaltung der Leuchtanordnung.

Das Deckelelement kann an einer dem Hohlraum abgewandten Seite eine Schalteinrichtung aufweisen, mittels welcher eine Leuchtstärke der Lichtquelle verändert werden kann. So lässt sich die Lichtquelle je nach Bedarf dimmen, etwa um eine geringstmögliche Beeinträchtigung weiterer, nicht die Lichtquelle als Leselicht nutzender Fahrzeuginsassen, insbesondere eines Fahrers, zu vermeiden.

Besonders einfach ist die Schalteinrichtung bedienbar, wenn sie wenigstens ein kapazitives Sensorelement umfasst. So kann beispielsweise durch Entlangstreichen auf dem wenigstens einen kapazitiven Sensorelement das Licht der Lichtquelle, insbesondere in diskreten Schritten, gedimmt werden. Das kapazitive Sensorelement kann jedoch auch als berührungsloser Schalter ausgebildet sein, wobei etwa durch Vorsehen mehrerer solcher berührungsloser Schalter ein Dimmen des Lichts der Lichtquelle in diskreten Schritten möglich ist.

Als weiter vorteilhaft hat es sich gezeigt, wenn das Deckelelement durch das Bewegen des Schwenkarms in die Funktionsstellung in die Schließstellung bewegbar ist, in welcher es den Hohlraum zumindest bereichsweise abdeckt. Durch ein solches gekoppeltes Bewegen des Deckelelements gemeinsam mit dem Verschwenken des Schwenkarms aus der Verstaustellung in die Funktionsstellung ist der Bedienkomfort der Leuchtanordnung weiter erhöht. Es braucht nämlich lediglich ein Handgriff vorgenommen zu werden, um die Lichtquelle einzuschalten und zugleich die Dimmfunktion bereitzustellen.

In einer weiteren vorteilhaften Ausgestaltung der Erfindung ist ein Schieber vorgesehen, mittels welchem sich eine Größe eines mittels der Lichtquelle beleuchtbaren Bereichs verändern lässt. So lässt sich beispielsweise bei Nutzung der Lichtquelle als Leselicht ein Lesefeld vergrößern oder je nach Bedarf verkleinern. So kann besonders gut das Licht der Lichtquelle auf einen gewünschten Bereich eines zu betrachtenden Objekts konzentriert werden, und die Leuchtanordnung lässt sich besonders situationsangepasst nutzen.

Der Schieber kann insbesondere an dem Schwenkarm angeordnet sein, etwa an einer Seite desselben, welche bei in die Verstaustellung verschwenktem Schwenkarm nicht sichtbar ist. Ein solcher Schieber lässt sich besonders einfach bedienen, da er ertastet werden kann, ohne dass ein Nutzer der Leuchtanordnung seinen Blick dem Schwenkarm zuzuwenden braucht.

Mittels des Schiebers kann ein Abstand einer Blende von der Lichtquelle verändert werden. So kann durch Verschieben des Schiebers die Blende zur Lichtquelle hin oder von der Lichtquelle weg verschoben werden. Zusätzlich oder alternativ kann die Lichtquelle von der Blende weg oder zur Blende hin verschoben werden, indem der Nutzer den Schieber betätigt.

Bevorzugt ist die Lichtquelle derart in einem stirnseitigen Endbereich des Schwenkarms angeordnet, dass bei eingeschalteter Lichtquelle eine Austrittsrichtung des Lichts mit einer Längsachse des Schwenkarms zusammenfällt. Dann lässt sich nämlich durch Verschwenken des Schwenkarms das Licht besonders gut auf einen gewünschten Bereich innerhalb eines Fahrgastraums des Kraftfahrzeugs richten, wenn die Leuchtanordnung in dem Kraftfahrzeug angeordnet ist.

Die Lichtquelle kann durch wenigstens eine Leuchtdiode gebildet sein oder wenigstens eine Leuchtdiode umfassen. So lässt sich bei einem vergleichsweise geringen Bedarf an elektrischer Energie eine gute Leuchtstärke und zugleich eine besonders hohe Langlebigkeit der Lichtquelle sicherstellen.

Der Schwenkarm kann sowohl um die Schwenkachse als auch in Richtung der Schwenkachse bewegbar sein, damit das Licht der Lichtquelle besonders gut gewünschte Bereiche im Fahrgastraum erreichen kann. Der Schwenkarm kann jedoch auch mehr als zwei Freiheitsgrade der Bewegung aufweisen und etwa über ein Kugelgelenk an dem Gehäuse gelagert sein. Zusätzlich oder alternativ kann vorgesehen sein, dass eine Basis des Schwenkarms, durch welche die Schwenkachse verläuft, um die Fahrzeughochachse verdreht werden kann. Durch derartige Bewegbarkeiten des Schwenkarms lässt sich die Lichtquelle als Leselicht besonders flexibel einsetzen.

Schließlich hat es sich als vorteilhaft gezeigt, wenn eine Oberfläche des Schwenkarms bei in die Verstaustellung bewegtem Schwenkarm mit einem Randbereich des Gehäuses bündig abschließt, welcher einen in dem Gehäuse vorgesehenen Aufnahmeraum für den Schwenkarm begrenzt. Dann kann nämlich der Schwenkarm zusammen mit der Lichtquelle bei Nichtgebrauch in einer planen Fläche untergebracht werden. Dies sorgt für ein besonders ansprechendes Erscheinungsbild des Gehäuses.

Das erfindungsgemäße Kraftfahrzeug umfasst wenigstens eine erfindungsgemäße Leuchtanordnung.

Bevorzugt ist die wenigstens eine Leuchtanordnung auf einer Fahrerseite und/oder auf einer Beifahrerseite eines Fahrgastraumes des Kraftfahrzeugs, etwa im Fondbereich des Fahrgastraums angeordnet. Insbesondere kann eine Anordnung der Leuchtanordnung in einem Dachbereich des Fahrgastraums vorgesehen sein.

Die Schwenkachse des Schwenkarms kann zumindest im Wesentlichen mit der Fahrzeugquerrichtung zusammenfallen, so dass der Schwenkarm in die Fahrzeuglängsrichtung aus der Verstaustellung in die Funktionsstellung und zurück verschwenkt werden kann.

Die für die erfindungsgemäße Leuchtanordnung beschriebenen Vorteile und bevorzugten Ausführungsformen gelten auch für das erfindungsgemäße Kraftfahrzeug und umgekehrt.

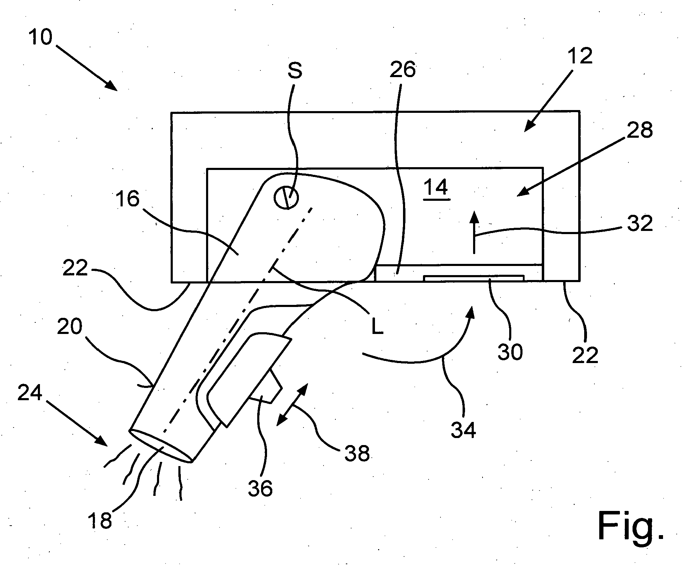

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung gemäß den beiliegenden Ansprüchen verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisch eine Leuchtanordnung, welche einen aus einem Gehäuse heraus schwenkbaren Schwenkarm umfasst, wobei eine an dem Schwenkarm angeordnete Lichtquelle durch das Herausschwenken des Schwenkarms aus dem Gehäuse eingeschaltet wird.

Eine in der Fig. gezeigte Leuchtanordnung 10 kann beispielsweise in einem Fondbereich des Fahrgastraums eines Kraftwagens angeordnet sein. Die Leuchtanordnung 10 umfasst ein Gehäuse 12, in welchem ein Aufnahmeraum 14 vorgesehen ist. Der Aufnahmeraum 14 dient dem Aufnehmen einer Leseleuchte, welche einen Schwenkarm 16 und zumindest eine an dem Schwenkarm 16 angeordnete Lichtquelle 18 umfasst. Die Lichtquelle 18 ist bevorzugt als Leuchtdiode ausgebildet. Die Lichtquelle 18 ist vorliegend in einem stirnseitigen Endbereich des Schwenkarms 16 angeordnet.

In einer Verstaustellung ist der Schwenkarm 16 derart in dem Aufnahmeraum 14 untergebracht, dass eine Oberfläche 20 des Schwenkarms 16 mit einem planen Randbereich 22 des Gehäuses 12 bündig abschließt. Der plane Randbereich 22 begrenzt hierbei den Aufnahmeraum 14 für den Schwenkarm 16. In der Verstaustellung ist somit der Schwenkarm 16 mit der in diesen integrierten Lichtquelle 18 in der planen Fläche untergebracht, welche durch das Gehäuse 12 bereitgestellt ist. Das Gehäuse 12 kann derart in einem Dachbereich des Kraftwagens angeordnet sein, dass der plane Randbereich 22 des Gehäuses 12 mit einem Dachhimmel des Kraftwagens bündig abschließt. Auch kann durch den Dachhimmel das Gehäuse 12 gebildet sein.

Bei Bedarf kann der Schwenkarm 16 in seine in der Fig. gezeigte Funktionsstellung aus dem Aufnahmeraum 14 herausgeschwenkt werden, wobei in jeweiligen Funktionsstellungen des Schwenkarms 16 unterschiedliche Schwenkwinkel einer Bewegung um eine Schwenkachse S des Schwenkarms 16 möglich sind. Das Herausschwenken des Schwenkarms 16 aus dem Aufnahmeraum 14 kann insbesondere durch Ausüben eines Drucks auf den sich in der Verstaustellung befindenden Schwenkarm 16 bewirkt werden, etwa indem der Schwenkarm 16 von unten angetippt und so die Vorspannung eines Federelements gelöst wird.

Durch das Herausschwenken des Schwenkarms 16 aus dem Aufnahmeraum 14 wird die Lichtquelle 18 eingeschaltet, und Licht 24 tritt aus dem Schwenkarm 16 aus. Zugleich mit dem Herausschwenken des Schwenkarms 16 bewegt sich ein nach Art einer Klappe ausgebildetes Deckelelement 26, welches an dem Gehäuse 12 gehalten ist, in eine in der Fig. gezeigte Schließstellung.

In dieser Schließstellung ist ein Hohlraum 28 in dem Gehäuse 12 abgedeckt, welcher einen Teilbereich des Aufnahmeraums 14 umfasst, und in welchem sich bei in die Verstaustellung bewegtem Schwenkarm 16 die Lichtquelle 18 befindet. Das Deckelelement 26 verschließt also die durch das Herausdrehen des Schwenkarms 16 aus dem Aufnahmeraum 14 entstehende Öffnung in dem Gehäuse 12. Dies geschieht bevorzugt gleichzeitig mit dem Herausschwenken des Schwenkarms 16 aus dem Aufnahmeraum 14.

Auf einer dem Hohlraum 28 abgewandeten Seite des Deckelelements 26 ist eine Schalteinrichtung 30 angeordnet, welche wenigstens einen kapazitiven Sensor umfasst. Mittels dieser kapazitiven Schalteinrichtung 30 oder Schaltfläche ist es möglich, das aus dem Schwenkarm 16 austretende Licht 24 insbesondere in verschiedenen Stufen zu dimmen.

Wird der Schwenkarm 16 wieder in seine Verstaustellung verschwenkt, in welcher er in dem Aufnahmeraum 14 aufgenommen ist, so bewegt sich das Deckelelement 26 in den Aufnahmeraum 14 hinein. Eine entsprechende Bewegungsrichtung des Deckelelements 26 ist in der Fig. durch einen Pfeil 32 veranschaulicht. Das Deckelelement 26 fährt also zeitgleich mit dem Verstauen des Schwenkarms 16 in dem Aufnahmeraum 14 in die Fahrzeughochrichtung nach oben.

Die Schwenkbewegung des Schwenkarms 16 um die Schwenkachse S beim Verschwenken des Schwenkarms 16 in seine Verstaustellung ist in der Fig. durch einen weiteren Bewegungspfeil 34 veranschaulicht.

Das Licht 24, welches in eine Richtung aus dem Schwenkarm 16 austritt, welche mit einer Längsachse L des Schwenkarms 16 zusammenfällt, kann bevorzugt nicht nur gedimmt werden. Vielmehr lässt sich insbesondere eine Größe eines Lichtfelds, also eines mittels der Lichtquelle 18 beleuchtbaren Bereichs verändern.

Vorliegend ist hierfür an einer Unterseite des Schwenkarms 16, welche in der Verstaustellung einem Boden des Aufnahmeraums 14 zugewandt ist, ein Schieber 36 angeordnet. Der Schieber 36 lässt sich in durch einen Doppelpfeil 38 veranschaulichte Schieberichtungen, also entlang der Längsachse L verschieben. Das Verschieben des Schiebers 36 bewirkt die Verschiebung einer Blende relativ zur Lichtquelle 18. Hierbei können die Blende und/oder die Lichtquelle 18 mittels des Schiebers 36 bewegt werden. Das Verschieben des Schiebers 36 sorgt so für eine Vergrößerung oder eine Verkleinerung eines mit der Lichtquelle 18 beleuchtbaren Lesefelds.

Die Leuchtanordnung 10 kann insbesondere derart in dem Dachbereich des Kraftwagens untergebracht sein, dass für Fondpassagiere ein platzsparendes, hochwertiges und inszeniertes Leselicht bereitgestellt ist. Hierbei kann die Schwenkachse S mit der Fahrzeugquerrichtung zusammenfallen.

Der gemäß der Fig. in Richtung zur Fahrzeugfront hin aus dem Aufnahmeraum 14 heraus geschwenkte Schwenkarm 16 kann in der gezeigten Schwenkstellung zusätzlich zumindest in die Fahrzeugquerrichtung bewegbar sein, so dass der Fondpassagier das Licht 24 besonders gut auf ein Buch, eine Zeitschrift oder dergleichen richten kann. Insbesondere kann der Schwenkarm 16 kugelgelenkig an dem Gehäuse 12 gehalten sein.

## Patentansprüche

1. Leuchtanordnung für ein Kraftfahrzeug, mit einer Lichtquelle (18) welche an einem Schwenkarm (16) gehalten ist, wobei der Schwenkarm (16) aus einer Verstaustellung, in welcher der Schwenkarm (16) zumindest bereichsweise in einem Gehäuse (12) aufgenommen ist, durch eine Schwenkbewegung des Schwenkarms (16) um eine Schwenkachse (S) in wenigstens eine Funktionsstellung bewegbar ist, in welcher die Lichtquelle (18) aus dem Gehäuse (12) herausbewegt ist,
wobei die Lichtquelle (18) durch das Bewegen des Schwenkarms (16) aus der Verstaustellung in die wenigstens eine Funktionsstellung einschaltbar ist,
wobei an dem Gehäuse (12) ein in eine Schließstellung bewegbares Deckelelement (26) gehalten ist,
**dadurch gekennzeichnet, dass**
das Deckelelement (26) in der Schließstellung eine durch das Herausdrehen des Schwenkarms (16) aus einem dem Aufnehmen des Schwenkarms (16) und der Lichtquelle (18) dienenden Aufnahmeraum (14) des Gehäuses (12) entstehende Öffnung in dem Gehäuse (12) verschließt, während sich der Schwenkarm (16) in der Funktionsstellung befindet, wobei mittels des Deckelelements (26) der Hohlraum (28) in dem Gehäuse (12) zumindest bereichsweise abdeckbar ist, welcher bei in die Verstaustellung bewegtem Schwenkarm (16) von der Lichtquelle (18) eingenommen ist.

2. Leuchtanordnung nach Anspruch 1,
**dadurch gekennzeichnet, dass**
das Deckelelement (26) an einer dem Hohlraum (28) abgewandten Seite eine, insbesondere wenigstens ein kapazitives Sensorelement umfassende, Schalteinrichtung (30) aufweist, mittels welcher eine Leuchtstärke der Lichtquelle (18), insbesondere in diskreten Schritten, veränderbar ist.

3. Leuchtanordnung nach Anspruch 1 oder 2,
**dadurch gekennzeichnet, dass**
das Deckelelement (26) durch das Bewegen des Schwenkarms (16) in die Funktionsstellung in die Schließstellung bewegbar ist, in welcher es den Hohlraum (28) zumindest bereichsweise abdeckt.

4. Leuchtanordnung nach einem der Ansprüche 1 bis 3,
**gekennzeichnet durch**
einen, insbesondere an dem Schwenkarm (16) angeordneten, Schieber (36) zum Verändern einer Größe eines mittels der Lichtquelle (18) beleuchtbaren Bereichs.

5. Leuchtanordnung nach Anspruch 4,
**dadurch gekennzeichnet, dass**
mittels des Schiebers (36) ein Abstand einer Blende von der Lichtquelle (18) veränderbar ist.

6. Leuchtanordnung nach einem der Ansprüche 1 bis 5,
**dadurch gekennzeichnet, dass**
die, insbesondere durch wenigstens eine Leuchtdiode gebildete oder wenigstens eine Leuchtdiode umfassende, Lichtquelle (18) derart in einem stirnseitigen Endbereich des Schwenkarms (16) angeordnet ist, dass bei eingeschalteter Lichtquelle (18) eine Austrittsrichtung des Lichts (24) mit einer Längsachse (L) des Schwenkarms (16) zusammenfällt.

7. Leuchtanordnung nach einem der Ansprüche 1 bis 6,
**dadurch gekennzeichnet, dass**
eine Oberfläche (20) des Schwenkarms (16) bei in die Verstaustellung bewegtem Schwenkarm (16) mit einem Randbereich (22) des Gehäuses (12) bündig abschließt, welcher einen in dem Gehäuse (12) vorgesehenen Aufnahmeraum (14) für den Schwenkarm (16) begrenzt.

8. Kraftfahrzeug mit wenigstens einer Leuchtanordnung (10) nach einem der Ansprüche 1 bis 7, wobei die wenigstens eine Leuchtanordnung (10) auf einer Fahrerseite und/oder auf einer Beifahrerseite eines Fahrgastraums des Kraftfahrzeugs, insbesondere in einem Dachbereich eines Fonds des Fahrgastraums, angeordnet ist.

9. Kraftfahrzeug nach Anspruch 8,
**dadurch gekennzeichnet, dass**
die Schwenkachse (S) des Schwenkarms (16) zumindest im Wesentlichen mit der Fahrzeugquerrichtung zusammenfällt.

## Claims

1. Light assembly for a motor vehicle, with a light source (18) which is held on a pivot arm (16), wherein the pivot arm (16) from a stowed position, in which the pivot arm (16) is at least partially accommodated in a housing (12), is movable by means of a pivotal movement of the pivot arm (16) about a pivot axis (S) in at least one working position, in which the light source (18) is moved out of the housing (12),
wherein the light source (18) can be switched on by moving the pivot arm (16) out of the stowed position into the at least one working position,
wherein a movable in a closed position lid member (26) is held on the housing (12),
**characterized in that**
the lid member (26) in the closed position, closes an opening in the housing (12) which is formed by turning out the pivot arm (16) from a receiving space (14) of the housing (12) serving to receive the pivot arm (16) and the light source (18), while the pivot arm (16) is in the working position, wherein by means of the lid member (26) the cavity (28) in the housing (12) is at least partially coverable, which when moved to the stowed position of the pivot arm (16) is taken by the light source (18).

2. Light assembly according to claim 1,
**characterized in that**
the lid member (26) has on a side facing away from the cavity (28) a switching device (30) comprising in particular at least one capacitive sensor element, by means of which a luminous intensity of the light source (18) can be changed, in particular in discrete steps.

3. Light assembly according to claim 1 or 2, **characterized in that**
the lid member (26) can be moved into the closed position by moving the pivot arm (16) into the working position, in which it covers the cavity (28) at least in regions.

4. Light assembly according to one of the claims 1 to 3,
**characterized in that**
a slider (36) is in particular arranged on the pivot arm (16) for changing a size of an illuminable area by means of the light source (18).

5. Light assembly according to claim 4,
**characterized in that**
by means of the slider (36) a distance of an aperture from the light source (18) is variable.

6. Light assembly according to one of claims 1 to 5,
**characterized in that**
the light source (18), formed in particular by at least one light-emitting diode or comprising at least one light-emitting diode, is arranged in such a way in a frontal end area of the pivot arm (16) that when the light source (18) is switched on an exit direction of the light (24) coincides with a longitudinal axis (L) of the pivot arm (16).

7. Light assembly according to one of claims 1 to 6,
**characterized in that**
a surface (20) of the pivot arm (16), with the pivot arm (16) moved into the stowed position, is flush with an edge region (22) of the housing (12) which has a receiving space (14) for the pivot arm (16) provided in the housing (12).

8. Motor vehicle with at least one light assembly (10) according to one of the claims 1 to 7, wherein the at least one light assembly (10) is arranged on a driver side and/or on a passenger side of a passenger compartment of the motor vehicle, in particular in a roof area of a rear area of the passenger compartment.

9. Motor vehicle according to claim 8,
**characterized in that**
the pivot axis (S) of the pivot arm (16) coincides at least substantially with the vehicle's transverse direction.

## Revendications

1. Système d'éclairage pour un véhicule automobile, avec une source de lumière (18) qui est maintenue sur un bras pivotant (16), dans lequel le bras pivotant (16) peut être déplacé d'une position de rangement, dans laquelle le bras pivotant (16) est reçu au moins par endroits dans un boîtier (12), par un mouvement pivotant du bras pivotant (16) autour d'un axe de pivotement (S) dans au moins une position fonctionnelle, dans laquelle la source de lumière (18) est déplacée du boîtier (12),
dans lequel la source de lumière (18) peut être allumée par le déplacement du bras pivotant (16) de la position de rangement dans l'au moins une position fonctionnelle,
dans lequel un élément de couvercle (26) mobile dans une position de fermeture est maintenu sur le boîtier (12),
**caractérisé en ce que**
l'élément de couvercle (26) ferme dans la position de fermeture une ouverture apparaissant par la rotation du bras pivotant (16) hors d'un espace de réception (14) servant à la réception du bras pivotant (16) et de la source de lumière (18) du boîtier (12) dans le boîtier (12), alors que le bras pivotant (16) se trouve dans la position fonctionnelle, dans lequel au moyen de l'élément de couvercle (26) l'espace creux (28) peut être recouvert dans le boîtier (12) au moins par endroits, qui est occupé en cas de bras pivotant (16) déplacé dans la position de rangement par la source de lumière (18).

2. Système d'éclairage selon la revendication 1,
**caractérisé en ce que**
l'élément de couvercle (26) présente sur un côté éloigné de l'espace creux (28) un dispositif de commutation (30) comportant en particulier au moins un élément de capteur capacitif, au moyen duquel une intensité lumineuse de la source de lumière (18) peut être modifiée en particulier par pas discrets.

3. Système d'éclairage selon la revendication 1 ou 2,
**caractérisé en ce que**
l'élément de couvercle (26) est mobile par le déplacement du bras pivotant (16) dans la position fonctionnelle dans la position de fermeture dans laquelle il recouvre au moins par endroits l'espace creux (28).

4. Système d'éclairage selon l'une quelconque des revendications 1 à 3,
**caractérisé par**
un coulisseau (36) disposé en particulier sur le bras pivotant (16) pour la modification d'une grandeur d'une zone pouvant être éclairée au moyen de la source de lumière (18).

5. Système d'éclairage selon la revendication 4,
**caractérisé en ce que**
une distance entre un panneau et la source de lumière (18) peut être modifiée au moyen du coulisseau (36).

6. Système d'éclairage selon l'une quelconque des revendications 1 à 5,
**caractérisé en ce que**
la source de lumière (18) comportant au moins une diode électroluminescente ou formée en particulier par au moins une diode électroluminescente est disposée dans une zone d'extrémité côté avant du bras pivotant (16) de telle manière qu'en cas de source de lumière (18) allumée un sens de sortie de la lumière (24) coïncide avec un axe longitudinal (L) du bras pivotant (16).

7. Système d'éclairage selon l'une quelconque des revendications 1 à 6,
**caractérisé en ce que**
une surface (20) du bras pivotant (16) se termine à fleur en cas de bras pivotant (16) déplacé dans la position de rangement avec une zone de bord (22) du boîtier (12) qui délimite un espace de réception (14) prévu dans le boîtier (12) pour le bras pivotant (16).

8. Véhicule automobile avec au moins un système d'éclairage (10) selon l'une quelconque des revendications 1 à 7, dans lequel l'au moins un système d'éclairage (10) est disposé sur un côté de conducteur et/ou sur un côté de passager avant d'un habitacle du véhicule automobile, en particulier dans une zone de toit d'un fond de l'habitacle.

9. Véhicule automobile selon la revendication 8,
**caractérisé en ce que**
l'axe de pivotement (S) du bras pivotant (16) coïncide au moins sensiblement avec le sens transversal de véhicule.
